# EUROPEAN PATENT APPLICATION

(11) **EP 4 790 262 A1**
(43) Date of publication of application: **12.08.2026**
(21) Application number: 26155912.4
(22) Date of filing: 03.02.2026
(51) Int. Cl.: F04D 19/04, F04D 29/66, F16F 15/03, F04D 29/02

(54) **MAGNET ASSEMBLY FOR AN EDDY CURRENT DAMPER**

(30) Priority: 06.02.2025 GB 202501754
(71) Applicant: Leybold GmbH, 50968 Köln (DE)
(72) Inventor: PETERS, Benedikt, 50968 Cologne (DE); HOESGEN, Christian, 50968 Cologne (DE); RICHTER, Michael, 50968 Cologne (DE); LANG, Henning Markus, 50968 Cologne (DE); ESSER, Mario, 50968 Cologne (DE)
(74) Representative: Totman, Clare Elizabeth

(57) **Abstract**

Magnet assembly for an eddy current damper of a vacuum pump, comprising a hub to be connected to or integral with a rotor shaft of the vacuum pump, one or more ring magnets surrounding the hub, cover discs directly connected to the hub and arranged on both axial sides of the one or more ring magnets, and a sleeve surrounding the one or more ring magnets and being in direct contact with the radial outer surface of the ring magnet, wherein by the sleeve, the hub and the cover discs a sealed encapsulation for the one or more ring magnets is provided.

## Description

The present invention relates to a magnet assembly, preferably for an eddy current damper of a vacuum pump. Further, the present invention relates to an eddy current damper preferably for a vacuum pump, and to a vacuum pump comprising an eddy current damper.

Common vacuum pumps comprise a housing having an inlet and an outlet. In the housing a rotatably supported rotor assembly is disposed that is rotated by an electromotor. The rotor assembly is rotatably supported by bearings, wherein in common vacuum pumps these bearings can either be roller bearing or magnet bearings. Further, the rotor assembly comprises at least one rotor element. In the case of a turbo-molecular pump, the rotor assembly comprises a plurality of rotor elements built as vanes arranged in one or more stages interacting with respective stator elements connected to the housing. In the case of a turbo-molecular pump also the stator elements are built as vans arranged in an alternating manner with the one or more stages of the rotor assembly. By the rotation of the rotor assembly, a gaseous medium is conveyed from the inlet of the vacuum pump to the outlet of the vacuum pump.

Passive magnetic bearings or permanent magnetic bearings rely on the repulsive magnetic force of a rotated permanent magnet connected to the rotor assembly and a static permanent magnet. Therein, such a permanent magnetic bearing is contact free and therefore substantially wear-free and thus withstands high rotation speeds over long time. In the recent past development of fast rotating turbo-molecular pumps aims towards vacuum pumps with two contact free magnetic bearings. Due to contactless levitation of the rotor assembly, the rotor assembly is prone to vibrations. Therefore, it is known to implement eddy current dampers into these vacuum pumps damping vibration of the rotor assembly by generation of eddy currents. However, these eddy current dampers require a rotated magnet. The stronger the magnet the more eddy currents are induced, increasing the damping effect of the eddy current damper. However, strong magnets may tend to be brittle and thus are not able to withstand high rotational forces. In addition, strong magnets are prone to corrosion by water vapor or hydrogen which leads to fast degradation of these eddy current dampers.

It is an object of the present invention to provide a magnet assembly in particular for an eddy current damper of a vacuum pump which is easy to manufacture, allows use of magnets with higher rotational speeds and provides a reliable protection of corrosion for these magnets.

The problem is solved by a magnet according to claim 1 and an eddy current damper according to claim 14 and a vacuum pump according to claim 15.

According to the present invention a magnet assembly, in particular for an eddy current damper of a vacuum pump, is provided. The magnet assembly comprises a hub to be connected to or integral with a rotor shaft of the vacuum pump. One or more ring magnets are surrounding the hub. Further, the magnet assembly comprises cover discs and in particular exactly two cover discs directly connected to the hub and arranged on both axial sides of the one or more ring magnets. Thus, the cover discs are arranged on both axial sides of the one or more ring magnets, i.e. limit the position of the one or more ring magnets in the axial direction. In particular the cover discs directly abut or are in directly contact with the outer most axial surfaces of the one or more ring magnets. Alternatively, an axial gap is present either on one side or both sides between the outer most axial surfaces of the one or more ring magnets. In this case, the axial position of the one or more ring magnets is provided by the axial position relative to a sleeve. Hence, by joining the sleeve to the one or mor ring magnets, the relative position is determined. Further, the sleeve surrounds the one or more ring magnets and is in direct contact with the radial outer surface of the ring magnet. Thus, by the sleeve radial forces on the one or more ring magnets are mitigated or absorbed by the sleeve such that the magnet assembly can be rotated at higher rotational speeds. Therein, in particular, by the sleeve a compressive prestressing can be applied to the one or more ring magnets reducing tensile stress to the one or more ring magnets due to fast rotation during operation. Further, by the sleeve, the hub and the cover discs are sealed in order to provide an encapsulation for the one or more ring magnets such that corrosive gases such as water vapor or hydrogen cannot reach the one or more ring magnets. Thereby, corrosion of the one or more ring magnets is reliably prevented.

Preferably, the sleeve is made from a fiber reinforced material such as CFRP which provides a high strength with comparable low density and thus radial extension of the sleeve under fast rotation of the magnet assembly is reduced. Radial stress to the one or more ring magnets can be reduced. Alternatively the sleeve is made from a metal.

Preferably, the cover discs are made from a ferromagnetic material. Since the cover discs are arranged on both axial sides of the one or more ring magnets, i.e. limit the encapsulation of the one or more ring magnets in the axial directions, the cover discs are arranged at positions of high magnetic flux which is transmitted by the cover discs made from a ferromagnetic material. Hence, although using the cover discs for encapsulation of the one or more ring magnets, the magnetic force of the one or more ring magnets is substantially unhindered. Additionally, the inductivity of the ferromagnetic cover disks results in an additional phase shift of the eddy currents induced in the copper disk. This helps especially at low frequencies to amplify the created damping force.

Preferably, the cover discs have a thickness, in particular in the axial direction, of between 0.5mm to 2mm and preferably between 0.5mm and 1.5mm. Hence, the cover discs are sufficiently strong in order to provide a reliable positioning of the one or more ring magnets in the axial direction. In particular, the radial prestressing or pre-tensioning by the sleeve may be transferred to the hub by the cover discs. Hence higher prestress can be applied to the sleeve since excessive prestress may not damage the one or more ring magnets but may be transferred to the hub via the cover discs.

Preferably, the cover discs are identical or different. Thus, in particular if the cover discs are identical, the number of different parts for the magnet assembly can be reduced. On the other hand, by different cover discs, the strength of the individual cover disc can be tailored to the specific needs of the application.

Preferably, the one or more ring magnets are neodymium magnets such as NdFeB magnets. Therein, the one or more ring magnets can be all made from the same material or at least one ring magnet may be made from a different material. While NdFeB magnets provide high magnetic forces, they are brittle and thus prone to breaking under large rotational forces. Further, NdFeB magnets are prone to corrosion which is prevented by encapsulation of the one or more ring magnets.

Preferably, the cover discs are connected to the hub by an interference fit. By using an interference fit, additional means for maintaining the position of the cover discs are not necessary. In particular, due to the interference fit a tight and strong connection between the cover discs and the respective hub is provided.

Preferably, the sleeve is directly connected to the cover discs or in direct contact with the cover discs. Thus, as previously mentioned, prestressing of the sleeve is feasible and secure fixing the sleeve to the cover discs is possible even under fast rotation.

Preferably, the outer diameter of the one or more ring magnets is substantially the same as the outer diameter of the cover discs. Hence, the sleeve is in direct and tight-fitting contact with both the one or more ring magnets and the cover discs.

Preferably, the sleeve is connected to the cover discs by an interference fit. Additionally or alternatively, the sleeve is connected to the one or more ring magnets by an interference fit. Thus, by the interference fit a gas tight and strong connection between the sleeve and the cover discs as well as the sleeve and the one or more ring magnets is provided. Thus, reliable encapsulation of the one or more ring magnets is provided. Additional means for connecting the sleeve either to the one or more ring magnets or the cover discs are not necessary, reducing the number of necessary parts in the magnet assembly and the number of steps of assembly of the magnet assembly.

Preferably, a gap is present between the hub and the ring magnet. Since the hub is usually made from a metal, upon fast rotation radial extension occurs which would be transferred to the one or more ring magnets. However, due to the gap, the hub will extend into the gap and thus radial forces from the hub are not transferred to the ring magnet. In particular, the gap has a radial size between 0.05mm and 5mm and preferably between 0.1mm and 1mm.

Preferably, all connections of the magnet assembly are provided by respective interference fits. In particular, connection of the sleeve to the cover discs, to the one or more ring magnets magnet and/or connection of the cover discs to the hub is not performed by welding or glueing. Welding and glueing does not provide a reliable connection and tight encapsulation. In particular, welding is labor and time intensive. Glueing is prone to aging and thus limiting the lifetime of the magnet assembly.

Preferably, the outermost surface of the magnet assembly and here in particular the radial outermost surface of the magnet assembly is provided by the sleeve. Hence, the sleeve does not have any further radial surrounding element and is thus directly opposite to a static conductive element of the eddy current damper.

Preferably, the hub comprises at least one step in the radial outer surface. This step can be used as abutment surface when joining the cover disc. Hence, the hub can be inserted into the cover disc until the cover disc abuts against the step, thereby defining the axial position of the cover disc relative to the hub. In particular, the hub comprises two steps in the radial outer surface facing in opposite directions. Thus, between these two steps, the radial outer surface for the hub comprises a protrusion which is located between the two cover discs. Hence, the cover discs can be joined to the hub from two opposite sides until each abuts against the respective step.

Preferably, the magnet assembly consists of the hub, the one or more ring magnets, the two cover discs and the sleeve. Consequently, the design of the magnet assembly is simplified still providing sufficient and reliable encapsulation of the one or more ring magnets as well as protection of the one or more ring magnets from the high radial forces upon rotation of the magnet assembly.

Preferably, the magnet assembly comprises exactly one ring magnet. More preferably, the magnet assembly comprises more than one ring magnet.

In another aspect of the present invention an eddy current damper, in particular for a vacuum pump, is provided. The eddy current damper comprises a static damper element and at least one magnet assembly as described before. In particular, the eddy current damper comprises more than one magnet assembly and preferably exactly two magnet assemblies as described before. Therein, the magnet assemblies can be built identically or at least one magnet assembly differs from the other. Therein, the magnet assembly is arranged radially next to the static damper element and rotated by a shaft of the vacuum pump.

Preferably, the static damper element comprises a conductive sleeve surrounding the one or more magnet assemblies which is extending in an axial direction, i. e. shaped as a cylinder.

Preferably, the static damper element comprises a radial extension extending towards one of the axial ends of the at least one magnet assembly. If the eddy current damper comprises more than one magnet assembly, the radial extension may extend into a gap between directly adjacent magnet assemblies. Therein, a gap between the radial extension and the one or more magnet assemblies is maintained.

Preferably, the static damper element is made from copper.

In another aspect of the present invention, a vacuum pump is provided. The vacuum pump is in particular built as turbo-molecular pump.

The vacuum pump comprises a rotated shaft and an eddy current damper as described before. Therein, the at least one magnet assembly is connected to the shaft.

Preferably, the hub of the magnet assembly is connected to the shaft by an interference fit or integrally built with the shaft.

Preferably, the eddy current damper is arranged at an end of the rotor shaft opposite to the inlet of the vacuum pump.

Preferably, the vacuum pump comprises a first permanent magnetic bearing and a second permanent magnetic bearing for radial support of the rotor shaft.

Preferably, the vacuum pump comprises an active axial magnetic bearing.

Preferably, the vacuum pump is completely magnetic levitated.

In the following, the present invention is described by way of example only with reference to the accompanying figures.

The figures show:
- Figure 1: a vacuum pump according to the present invention and
- Figure 2: a detailed view of the magnet assembly according to the present invention.

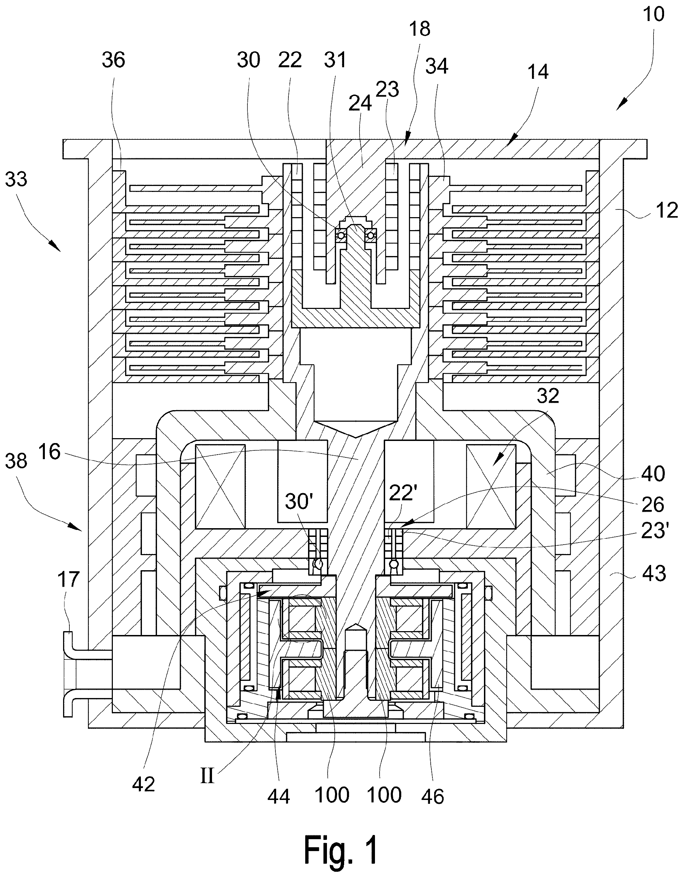

Figure 1 shows a vacuum pump 10 according to the present invention. The vacuum pump 10 comprises a housing 12 having an inlet 14 and an outlet 17. With the inlet 14 the vacuum pump 10 is connected to vessel to be evacuated. In the housing 12 a rotor shaft 16 is arranged which is rotated by an electromotor 32. In a turbomolecular pumping stage 33 a plurality of rotor vanes 34 are connected to the rotor shaft 16 interacting with stator vanes 36 connected to the housing and arranged in an alternating manner with the rotor vanes. Downstream of the turbomolecular pumping stage 33 a molecular drag stage 38 is arranged built as Holweck stage. The molecular drag stage 38 comprises a rotated cylinder 40 interacting with a stator 43 having a threaded channel. By rotation of the rotor shaft 16, a gaseous medium is conveyed from the inlet 14 towards the outlet 17. Thereby, the rotor shaft 16 is rotatably supported by a first magnetic bearing 18 at the inlet side of the rotor shaft 16. The first magnetic bearing 18 is built as permanent magnetic bearing comprising a plurality of rotated ring magnets 22 connected to the rotor shaft 16 and rotated together with the rotor shaft 16. Opposite to the rotated ring magnets 22, the first magnetic bearing 18 comprises a plurality of static ring magnets 23 connected to a trunnion 24 radially opposite to the rotated ring magnets 22 thereby rotatably supporting the rotor shaft 16 in a contact-free manner due to mutual repulsion of the ring magnets 22, 23. Further, an emergency bearing 30 is implemented in the first magnetic bearing 18 which is not in contact with a pin 31 of the rotor shaft 16 and only comes into contact with the pin 31 of the rotor shaft 16 upon failure of the first magnetic bearing 18.

Furthermore, the vacuum pump 10 comprises a second magnetic bearing 26 which is arranged towards the inlet side of the rotor shaft 16 in a similar way as the first magnetic bearing 18, i.e. comprises a plurality of rotated ring magnets 22' connected to rotor shaft 16 and rotated therewith. The rotated ring magnets 22' of the second magnetic bearing 26 are located opposite to static ring magnets 23', wherein by the repulsive magnetic force between the rotated ring magnets 22' and the static ring magnets 23' the rotor shaft 16 is rotatably supported. As for the first magnetic bearing 18 also the second magnetic bearing 26 comprises an emergency bearing 30' which only comes into contact with the rotor shaft 16 upon failure of the second magnetic bearing 26.

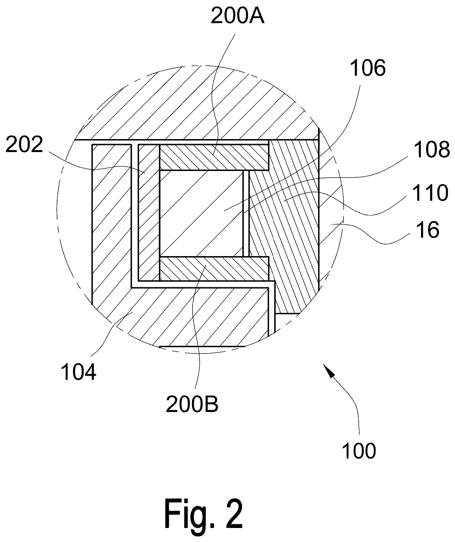

Thus, by the first magnetic bearing 18 and the second magnetic bearing 26 radial support of the rotor shaft is provided. Further to the first permanent magnetic bearing 18 and the second permanent magnetic bearing 26, the vacuum pump 10 comprises an active axial bearing 42 together with an eddy current damper 44. The eddy current damper 44 comprises a static damper element 46 which is connected to the housing 12. In particular, the static damper element 46 is made of a conductive material such as copper. Further, the eddy current damper 44 comprises, in the example of Figure 2, two magnet assemblies 100 connected to the rotor shaft 16. In the example of Fig. 2, the two shown magnet assemblies are built identically but may also differ in other embodiments.

Figure 2 shows a detailed view of the magnet assembly 100. The magnet assembly 100 comprises a hub 110 which is connected to the rotor shaft 16. In the example of Figure 2 the hub 110 and the rotor shaft 16 are separate parts. However, the hub 110 could also be integrally built with the rotor shaft 16.

The magnet assembly 100 further comprises a ring magnet 106. In the example of Figure 2, the magnet assembly 100 comprises only a single ring magnet 106. However, the magnet assembly 100 could also comprise more than one ring magnet preferably stacked in an axial direction. The ring magnet 106 is located between a first cover disc 200A and a second cover disc 200B. By the first cover disc 200A and the second cover disc 200B the axial position of the ring magnet 106 is fixed. If the magnet assembly comprises more than one ring magnet, all ring magnets may be arranged between the first cover disc 200A and the second cover disc 200B. Therein, the first cover disc 200A and the second cover disc 200B are made from a ferromagnetic material such that the magnetic flux of the ring magnet 106 can pass these cover discs 200A, 200B in a nearly undisturbed manner. Further, the cover discs 200A, 200B have an axial thickness which is sufficient in order to fix them to the hub 110 of the magnet assembly 100 by an interference fit. In particular, the axial thickness of the first cover disc 200A and the second cover disc 200B are between 0.5mm to 2mm and preferably between 05mm and 1-5mm. Therein, the axial thickness of the first cover disc 200A can be the same or different to the axial thickness of the second cover disc 200B.

The ring magnet 106 is surrounded by a sleeve 202. In particular, the sleeve 202 is made from a fiber reinforcement material or metal in order to prestress the ring magnet 106 and absorb radial stress upon rotation of the ring magnet 106. Therein, the sleeve 202 is directly connected to the cover discs 200A, 200B and the ring magnet 106. Consequently, prestress created by the sleeve 202 is transferred to the hub 110 via the cover disc 200A, 200B while the magnet assembly is not rotated. As soon as the magnet assembly 100 is rotated, the prestress supports the ring magnet 106 to withstand radial forces caused by a fast rotation of the rotor shaft 16. Further, a gap 108 is present between the hub 110 and the ring magnet 106. Thus, during fast rotation, radial extension of the hub 110 is not transferred to the ring magnet 106, reducing stress of the ring magnet 106.

Thus, all connections of the magnet assembly 100, i. e. connections of the cover discs 200A, 200B to the hub 110 as well as the connection of the sleeve 202 to the cover discs 200A, 200B are provided made by interference fits. Consequently, no additional means and measures need to be taken in order to provide a tight and strong connection between these elements. Hence, by the interference fits additional means such as glueing or welding can be omitted. At the same time reliable encapsulation of the ring magnet 106 within the volume created by the hub 110, the cover discs 200A, 200B and the sleeve 202 is provided. Contrary to glueing, no aging of the connection occurs. Further, the time intensive step of welding can be avoided which is in addition prone to failure.

Hence, by the present invention a magnet assembly 100 is provided which ensures reliable encapsulation of the ring magnet 106 of an eddy current damper 44 and at the same time allows for high rotational speeds.

### Reference list:

- 10: vacuum pump
- 12: housing
- 14: inlet
- 16: rotor shaft
- 17: outlet
- 18: first magnetic bearing
- 22, 22': rotated ring magnets
- 23, 23': static ring magnets
- 24: trunnion
- 26: second magnetic bearing
- 30: emergency bearing
- 30': emergency bearing
- 31: pin
- 32: electromotor
- 33: turbomolecular pumping stage
- 34: rotor vanes
- 36: stator vanes
- 38: molecular drag stage
- 40: rotated cylinder
- 42: active axial bearing
- 43: stator
- 44: eddy current damper
- 46: static damper element
- 100: magnet assembly
- 106: ring magnet
- 108: gap
- 110: hub
- 202: sleeve
- 200A: first cover disc
- 200B: second cover disc

## Claims

1. Magnet assembly in particular for an eddy current damper of a vacuum pump, comprising:
a hub to be connected to or integral with a rotor shaft of the vacuum pump,
one or more ring magnets surrounding the hub,
cover discs directly connected to the hub and arranged on both axial sides of the one or more ring magnets, and
a sleeve surrounding the one or more ring magnets and being in direct contact with the radial outer surface of the ring magnet,
wherein by the sleeve, the hub and the cover discs, a sealed encapsulation for the one or more ring magnets is provided.

2. Magnet assembly according to claim 1, wherein the sleeve is made from a fiber reinforced material or a metal.

3. Magnet assembly according to claim 1 or 2, wherein the cover discs are made from a ferromagnetic material.

4. Magnet assembly according to any of claims 1 to 3, wherein the cover discs have a thickness of between 0.5mm to 2mm and preferably between 0.5mm and 1.5mm.

5. Magnet assembly according to any of claims 1 to 4, wherein the cover discs are connected to the hub by an interference fit.

6. Magnet assembly according to any of claims 1 to 5, wherein the sleeve is directly connected to the cover discs.

7. Magnet assembly according to any of claims 1 to 6, wherein the outer diameter of the one or more ring magnets is substantially the same as the outer diameter of the cover discs.

8. Magnet assembly according to any of claims 1 to 7, wherein the sleeve is connected to the cover discs by an interference fit.

9. Magnet assembly according to any of claims 1 to 8, wherein the sleeve is connected to the one or more ring magnets by an interference fit.

10. Magnet assembly according to any of claims 1 to 9, wherein a gap is present between the hub and the one or more ring magnet.

11. Magnet assembly according to any of claims 1 to 10, wherein all connections of the magnet assembly are provided by respective interference fits.

12. Magnet assembly according to any of claims 1 to 11, wherein the cover discs are not connected to the sleeve, the magnet and/or the hub by welding or glueing.

13. Magnet assembly according to any of claims 1 to 12, wherein the magnet assembly consists of the hub, the one or more ring magnets, the two cover discs and the sleeve.

14. Eddy current damper, in particular for a vacuum pump, comprising a static damper element and at least one magnet assembly according to any of claims 1 to 13, wherein the magnet assembly is arranged next to the static damper element and rotated by a shaft of the vacuum pump.

15. Vacuum pump comprising a rotated shaft and an eddy current damper according to claim 14, wherein the at least one magnet assembly is connected to the shaft.

16. Vacuum pump according to claim 15, wherein the hub of the magnet assembly is connected to the shaft by an interference fit or integrally built with the shaft.
